# EUROPÄISCHE PATENTANMELDUNG

(11) **EP 1 815 756 A1**
(43) Veröffentlichungstag der Anmeldung: **08.08.2007**
(21) Anmeldenummer: 07101584.6
(22) Anmeldetag: 01.02.2007
(51) Int. Cl.: A23L 2/10

(54) **Verfahren zum Trocknen von Saft**

(30) Priorität: 02.02.2006 DE 102006004833
(71) Anmelder: Mannweiler, Holger, 65185 Wiesbaden (DE); Held, Dirk, 55543 Bad Kreuznach (DE)
(72) Erfinder: Mannweiler, Holger, 65185 Wiesbaden (DE); Held, Dirk, 55543 Bad Kreuznach (DE)
(74) Vertreter: Vossius & Partner

(57) **Zusammenfassung**

Die Erfindung betrifft ein Verfahren zum Trocknen von Saft, umfassend die Schritte:
(i) Bereitstellen von Saft; und
(ii) Wirbelschichttrocknung, um ein getrocknetes Produkt zu erhalten, wobei mindestens 20 Gew.-% des getrockneten Produkts vom Saft abgeleitetet sind.

Des Weiteren betrifft die Erfindung ein getrocknetes Produkt, das nach dem erfindungsgemäßen Verfahren erhältlich ist. Das erfindungsgemäße getrocknete Produkt kann zur Herstellung eines Lebensmittels, eines kosmetischen Produkts, eines Arzneimittels oder eines Nahrungsergänzungspräparats verwendet werden. Bei der Herstellung eines Getränks gemäß der vorliegenden Erfindung wird das getrocknete Produkt ggf. unter Zugabe weiterer Zutaten in Flüssigkeit gelöst.

## Beschreibung

Die Erfindung betrifft ein Verfahren zum Trocknen von Saft. Des Weiteren wird ein durch das erfindungsgemäße Verfahren erhältliche getrocknete Produkt sowie die Verwendung des selben beschrieben. Ein Verfahren zur Herstellung eines Getränks ist ebenfalls Gegenstand der Erfindung.

Fruchtsäfte werden z.T. als Direktsaft vertrieben, d.h. der Saft wird aus der Frucht gewonnen, in Flaschen abgefüllt und an die Abnehmer verteilt. Um die hohen Transport- und Lagerkosten zu verringern, werden allerdings inzwischen die meisten Fruchtsäfte nicht in unverdünnter Form sondern in Form von Fruchtsaftkonzentraten vom Ursprungsland ins Land des Endverbrauchs transportiert und dort vor dem Vertrieb mit Wasser, ggf. Zucker und anderen Zutaten vermischt. Das am häufigsten verwendete Verfahren zur Herstellung von Fruchtsaftkonzentraten ist das Eindampfen. Allerdings verflüchtigen sich hierbei Aromen, die getrennt aufgefangen und beim Rückverdünnen dem Konzentrat wieder zugeführt werden müssen. In der Regel weisen die Fruchtsaftkonzentrate einen Feststoffgehalt von 50 bis 65 Gew.-% auf, so dass immer noch erhebliche Wassermengen in dem Fruchtsaftkonzentrat vorhanden sind. Um ein Verderben des Konzentrats zu verhindern, muss es bei einer Temperatur von -8°C bis -18°C transportiert und gelagert werden.

Es ist auch bekannt, Fruchtsaftpulver aus Fruchtsaft, Fruchtsaftkonzentrat oder Fruchtmark zu gewinnen. Übliche Verfahren sind die Sprühtrocknung, Vakuumschaumtrocknung oder seltener die Gefriertrocknung. Auf Grund der in den Fruchtprodukten enthaltenen Fructose, die durch ihre Klebrigkeit die Trocknung erschwert, werden entweder nur Produkte hergestellt, die geringe Mengen an vom Fruchtsaft abgeleiteten Anteilen enthalten, oder es müssen größere Mengen an Trockenhilfsmitteln zugesetzt werden (H.-D. Belitz, W. Grosch, Lehrbuch der Lebensmittelchemie, Springer Verlag, Berlin, 1992). Folglich sind die durch diese Verfahren erhältlichen Fruchtsaftpulver nicht zur Herstellung von Fruchtsäften geeignet.

US-A-4,113,865 offenbart ein Verfahren zur Herstellung von Granulat, welches 8 bis 12 % von Zitrusfruchtsaft abgeleitetem Feststoff, nicht mehr als 0,05 % Wasser sowie Zucker enthält. Bei dem Verfahren wird , pulverisierter Zucker mit nicht konzentriertem Zitrusfruchtsaft und ggf. konzentriertem Zitrusfruchtsaft in einen Wirbelschichtgranulierapparat eingesprüht und bei Lufttemperaturen von nicht mehr als 90 °C granuliert und getrocknet. Das Granulat wird anschließend gesiebt, um eine maximale Korngröße von 1 mm zu erreichen und nochmals getrocknet, um einen Wassergehalt von nicht mehr als 0,05% zu erreichen.

In EP-A-479 084 wird ein spezielles Verfahren zur Herstellung von granulierter Zitronensäure beschrieben, bei dem eine vorgereinigte Zitronensäure enthaltende Fermentationsbrühe mit Trocknungskeimen in einen Fließbettreaktor eingebracht wird.

Ein Verfahren zur Herstellung eines gebrauten und/oder gegärten Getränkes, insbesondere Bier, bei dem Stammwürze mittels Wirbelschichttechnik getrocknet wird, wird in DE-A-101 31 962 beschrieben.

Eine Aufgabe der Erfindung war es ein einfaches und kostengünstiges Verfahren zur Trocknung von Saft anzugeben. In einer Ausführungsform sollte das getrocknete Produkt nach dem Lösen in Flüssigkeit ein wohlschmeckendes Getränk ergeben.

Die Erfindung betrifft ein Verfahren zum Trocknen von Saft, umfassend die Schritte:
(i) Bereitstellen von Saft; und
(ii) Wirbelschichttrocknung, um ein getrocknetes Produkt zu erhalten, wobei mindestens 20 Gew.-% des getrockneten Produkts vom Saft abgeleitetet sind.

Des Weiteren betrifft die Erfindung ein getrocknetes Produkt, das nach dem erfindungsgemäßen Verfahren erhältlich ist. Das erfindungsgemäße getrocknete Produkt kann in allen Anwendungen eingesetzt werden, in denen üblicherweise Säfte, Saftkonzentrate oder Saftpulver verwendet werden, beispielsweise bei der Herstellung eines Lebensmittels, eines kosmetischen Produkts, eines Arzneimittels oder eines Nahrungsergänzungspräparats. Bei der Herstellung eines Getränks gemäß der vorliegenden Erfindung wird das getrocknete Produkt ggf. unter Zugabe weiterer Zutaten in Flüssigkeit gelöst.

Bei dem erfindungsgemäßen Verfahren wird Saft durch Wirbelschichttrocknung getrocknet, um ein getrocknetes Produkt zu erhalten, bei dem mindestens 20 Gew.-% des getrockneten Produkts vom Saft abgeleitet sind. Im Gegensatz beispielsweise zu Stammwürze, die nur einen geringen Fructosegehalt aufweist, enthalten sowohl Säfte größere Mengen an Fructose, die bei konventionellen Trocknungsverfahren zu Problemen führen. Insbesondere führt der hohe Fructosegehalt zu klebrigen Massen, die in der Trocknungsanlage haften bleiben, zu Verstopfungen der Anlage und/oder zu schwer entfernbaren Belägen führen. Konventionell wurde daher beispielsweise bei Säften nur ein Teil des Wassers entfernt, um ein Konzentrat zu erhalten oder es mussten größere Mengen an Trockenhilfsmittel eingesetzt werden. Gerade im Lebensmittelbereich sind möglichst reine Produkte erwünscht, so dass der Einsatz von Trockenhilfsmitteln, insbesondere in größeren Mengen, nicht bevorzugt ist.

Als Säfte können in dem erfindungsgemäßen Verfahren alle Obst- und Gemüsesäfte verwendet werden. Beispiele für Obstsäfte sind Säfte von Zitrusfrüchten (beispielsweise Orangen, Zitronen, Grapefruit, Limonen, Mandarinen, Clementinen, Satsumas und Pomelos); Südfrüchten (beispielsweise Bananen, Ananas, Maracuja, Mango, Passionsfrucht, Kaki, Lychee, Granatapfel, Kiwi, Guave und Papaya); Steinobst (beispielsweise Kirschen, Aprikosen, Pfirsiche, Pflaumen und Nektarinen); Kernobst (beispielsweise Äpfel, Birnen und Quitten); und Beerenfrüchten (beispielsweise Johannisbeeren, Himbeeren, Brombeeren, Weintrauben, Sanddorn, Stachelbeeren, Holunder, Schlehen, Heidelbeeren, Preiselbeeren, Boysenbeeren und Erdbeeren).

Beispiele von Gemüse, die in dem erfindungsgemäßen Verfahren Verwendung finden können, sind Karotten, rote Beete, Tomaten, Sellerie, Zwiebeln, Artischocken, Knoblauch, Sauerkraut, Brokkoli, Gurken, Kartoffeln, Kürbisse, Paprika, Spargel sowie Rhabarber. Die Säfte können in gesäuerter (z.B. milchsaurer) oder ungesäuerter Form verwendet werden.

Mischungen der Säfte können selbstverständlich ebenfalls in dem erfindungsgemäßen Verfahren eingesetzt werden.

Das erfindungsgemäße Verfahren wird zum Trocknen von Säfte verwendet, da diese auf Grund des i.d.R. hohen Fructosegehalts sowie der enthaltenen Feststoffe mit konventionellen Verfahren schwerer zu trocknen sind. Das erfindungsgemäße Verfahren wird bevorzugt verwendet, um Fruchtsäfte, insbesondere von Zitrusfrüchten und Südfrüchten, zu trocknen. Besonders bevorzugt wird der Saft von Zitrusfrüchten, insbesondere Orangensaft, eingesetzt.

Der Saft sollte einen Fructosegehalt von mindestens 0,5 Gew.-%, bevorzugt 1,0 Gew.-%, mehr bevorzugt mindestens 1,2 Gew.-%, stärker bevorzugt mindestens 1,5 Gew.-%, noch stärker bevorzugt mindestens 2,0 Gew.-% und am stärksten bevorzugt mindestens 2,2 Gew.-%, aufweisen. Da es sich bei Säften um Naturprodukte handelt, schwankt der Fructosegehalt in Abhängigkeit von der Herkunft sowie anderer Faktoren, wie z.B. der Lagerdauer. Typische Fructosegehalte sind in der folgenden Tabelle angegebenen.

| Produkt | Typische Fructosegehalte [g Fructose/100 g Produkt] |
|---|---|
| Apfelsaft | 5,2 bis 6,6 |
| Grapefruitsaft | 1,6 bis 4,5 |
| Orangensaft | 2,2 bis 5,0 |
| Traubensaft | 4,2 bis 8,5 |
| Karottensaft | 1,0 bis 1,4 |
| Tomatensaft | 1,0 bis 2,0 |

Der Fructosegehalt kann nach jedem üblichen Verfahren, wie HPLC, bestimmt werden.

Säfte enthalten neben einen hohen Fructosegehalt einen niedrigen Gehalt an Maltose. Viele Säfte enthalten gar keine Maltose. Maltose wird bei konventionellen Trocknungsverfahren als Trockenhilfsmittel zugesetzt und ist in anderen Produkten, wie z.B. Bier oder Stammwürze, natürlicherweise enthalten. Es ist überraschend, dass mit dem erfindungsgemäßen Verfahren Saft trotz des hohen Fructosegehalts getrocknet werden kann, besonders überraschend ist, dass das erfindungsgemäße Verfahren auch ohne den Zusatz bzw. Anwesenheit von Maltose oder anderen Trockenhilfsmittel wie Glucose und Stärkesirup erfolgreich eingesetzt werden kann. Bevorzugt wird höchstens 10 Gew.-%, stärker bevorzugt höchstens 5 Gew.-%, noch stärker bevorzugt 0 Gew.-% Maltose bzw. Trockenhilfsmittel (bezogen auf das Gewicht der zu trocknenden Flüssigkeit) beim erfindungsgemäßen Verfahren zugesetzt. Der natürliche Gehalt an Maltose oder Glucose in dem zu trocknenden Saft wird hierbei nicht berücksichtigt.

Bevorzugt sollte das Verhältnis von Fructose (sofern vorhanden) zu Maltose (Gew./Gew. einschließlich des natürlichen Gehalts an Maltose) mindestens 0,5, stärker bevorzugt mindestens 1,0, noch stärker bevorzugt mindestens 2,0, besonders bevorzugt mindestens 2,2 und am stärksten bevorzugt mindestens 3,0 betragen.

Der Saft kann entweder als solches oder nach einer vorherigen Aufbereitung getrocknet werden. Zu den optionalen Aufbereitungsschritten gehören:
- die Abtrennung von leichtflüchtigen Aromen, die während des Trocknens verloren gehen könnten;
- das Entfernen eines Teils des enthaltenen Wassers; und
- die Abtrennung oder das Zerkleinern von Feststoffen, wie Fruchtfleisch.

Diese Aufbereitungsschritte können selbstverständlich miteinander kombiniert werden.

Auf Grund der schonenderen Trocknungsbedingungen und der Besonderheiten der Wirbelschicht wird die zu trocknende Flüssigkeit weniger thermisch belastet als bei konventionellen Troclcnungsverfahren. Hierdurch ist der Verlust an Aromen, beispielsweise durch Verflüchtigung oder durch Zersetzung, geringer. Dennoch kann es, beispielsweise bei bestimmten Produkten oder bei der Wahl einer hohen Trocknungsternperatur oder einer langen Verweildauer in der Wirbelschicht, zu unerwünschten Verlusten an Aromen kommen. Um einen Verlust an Aromen zu vermeiden, können diese nach konventionellen Verfahren, wie Destillation (z.B. Gegenstromdestillation) und/oder Anlegen von Unterdruck, vor dem Trocknen entfernt werden. In einer Ausführungsform können die erhaltenen Aromen nach dem Trocknen auf das getrocknete Produkt aufgebracht werden. Hierzu eignet sich ein zweiter dem Trocknen nachgeschalteter Wirbelschichtschritt, bei dem das getrocknete Produkt mit einer Schicht von Aromen beschichtet wird. Beschichtungsverfahren sind auf dem Fachgebiet bekannt. Entsprechende Anlagen sind beispielsweise von Glatt GmbH, Binzen, Deutschland kommerziell erhältlich. Alternativ können die Aromen gelagert werden und dem getrockneten Produkt beigegeben werden, wenn es zu dem gewünschten Endprodukt weiterverarbeitet wird. Beispielsweise können die Aromen zusammen mit dem getrockneten Produkt zu einem Getränk verarbeitet werden.

Dem Saft kann vor der Wirbelschichttrocknung ein Teil des enthaltenen Wassers entzogen werden. Der Saft soll allerdings auch in dieser Ausführungsform als Flüssigkeit in die Trocknungsvorrichtung eingebracht werden. Bevorzugt beträgt der Feststoffgehalt der zu trocknenden Flüssigkeit höchstens 70 Gew.-% und stärker bevorzugt höchstens 65 Gew.-%. Durch den vorherigen Wasserentzug muss bei der Wirbelschichttrocknung der zu trocknenden Flüssigkeit weniger Wasser entzogen werden. Obwohl hierdurch die Kosten für die Wirbelschichttrocknung geringer werden, entstehen zusätzliche Kosten für die Vorkonzentrierung. Ob eine Vorkonzentrierung bevorzugt ist, wird der Fachmann auf der Basis der Eigenschaften der zu trocknenden Flüssigkeit, der zur Verfügung stehenden Apparate und von wirtschaftlichen Überlegungen entscheiden. Dem Saft kann das Wasser nach bekannten Verfahren, wie Eindampfen, Unterdruck, Gefrieren, Druckfiltern oder Kombinationen davon, entzogen werden. Bei Säften können beispielsweise statt dem Direktsaft die kommerziell erhältlichen Saftkonzentrate der Wirbelschichttrocknung unterzogen werden.

Säfte können Feststoffe, wie Fruchtfleisch, enthalten. Diese können vor der Wirbelschichttrocknung ganz oder teilweise aus dem Saft entfernt werden, wenn sie beispielsweise im Endprodukt, das aus dem getrockneten Produkt hergestellt werden soll, unerwünscht sind. Alternativ können die Feststoffe zerkleinert werden, so dass sie die gewünschte Maximalgröße nicht überschreiten. Obwohl die Wirbelschichttrocknung auch mit Feststoff-haltigen Säften durchgeführt werden kann, ist es bevorzugt Feststoffe, wie Fruchtfleisch, mit einer Größe von mehr als 200 µm, stärker bevorzugt mehr als 100 µm, noch stärker bevorzugt mehr als 50 µm, vor der Wirbelschichttrocknung zu entfernen oder zu zerkleinern, um die Gefahr von Verstopfungen der Anlage zu verringern. Verfahren zum Entfernen oder zum Zerkleinern von Feststoffen, wie Filtration oder Zentrifugation, sind auf dem Fachgebiet bekannt. Bei handelsüblichen Saftkonzentraten ist Fruchtfleisch mit einer Größe von mehr als 50 µm nicht enthalten. Das entfernte Fruchtfleisch kann, falls erwünscht, dem Endprodukt, zu dem das getrocknete Produkt weiterverarbeitet werden soll, wieder zugeführt werden. In einer bevorzugten Ausführungsform kann das Fruchtfleisch zusammen mit dem getrockneten Produkt zu einem Getränk verarbeitet werden.

Unter einer Wirbelschicht wird ein System verstanden, in dem ein Prozessgas Feststoffteilchen von unten nach oben durchströmt. Ab einer bestimmten Strömungsgeschwindigkeit des Prozessgases, dem Wirbelpunkt, ist der Druckverlust in der Wirbelschicht auch bei weiterer Steigerung der Strömungsgeschwindigkeit im Wesentlichen konstant und entspricht dem auf die Flächeneinheit bezogenen Schüttgewicht. Die Feststoffteilchen in der Wirbelschicht sind im Wesentlichen homogen durchmischt. Die Eigenschaften des Systems entsprechen denen eines Fluids. Die Grundlagen der Wirbelschichttechnik sind u.a. in "Grundoperationen chemischer Verfahrenstechnik"; W. R. A. Vauck; H. A. Müller; Kapitel 4.2 und 10.3; 11. Auflage; Wiley-VCH; Stuttgart; 2000 erläutert.

Bei der Wirbelschichttrocknung wird die zu trocknende Flüssigkeit in eine Wirbelschicht von Teilchen eingesprüht. Die Wirbelschichttrocknung von Flüssigkeiten wird manchmal auch als "Wirbelschichtgranulation" oder "Wirbelschichtsprühgranulation" bezeichnet. Sie unterscheidet sich von der reinen Trocknung dadurch, dass das zu trocknende Material in Form einer Flüssigkeit und nicht in Form eines feuchten Feststoffs eingebracht wird. Die Wirbelschichttrocknung kann entweder diskontinuierlich oder, bevorzugterweise, kontinuierlich durchgeführt werden. Es sind mehrere Wirbelschichttrocknungsverfahren bekannt. Diese umfassen Fließbettverfahren und Strahlschichtverfahren. Im Rahmen der Erfindung wird unter einem Fließbettverfahren ein Wirbelschichtverfahren verstanden, bei dem Prozessgas von unten, i.d.R. über einen Siebboden, in die Wirbelschichtkammer eingeführt wird. Bei Strahlschichtverfahren wird dagegen das Prozessgas seitlich, i.d.R. durch eine Längsspalte, in die Wirbelschichtkammer eingeführt. Wirbelschichttrockner, insbesondere für Fließbettverfahren und Strahlschichtverfahren, sind u.a. von Glatt GmbH, Binzen, Deutschland kommerziell erhältlich. Beispiele für Wirbelschichttrockner sind in EP-A-479084, DE-A-38 08 277 und EP-A-163 836 offenbart. Strahlschichtverfahren sind im Rahmen der Erfindung bevorzugt, da sie die zu trocknende Flüssigkeit thermisch weniger belasten und zudem eine höhere Prozessstabilität aufweisen.

Bei der Wirbelschichttrocknung wird der, ggf. aufbereitete, Saft in die Wirbelschicht eingesprüht. Der Saft kann dabei in Gleichstrom, Gegenstrom oder quer zur Strömungsrichtung des Prozessgases eingesprüht werden. Um eine schnelle Trocknung der zu trocknenden Flüssigkeit zu gewährleisten, wird bevorzugt Gleichstrom gewählt. Das Prozessgas kann in Abhängigkeit vom zu trocknenden Produkt geeignet gewählt werden. Geeignet sind Inertgase, wie Stickstoff oder Argon, ebenso wie Luft. Aus Kostengründen wird Luft bevorzugt.

In der Wirbelschicht, in die die zu trocknende Flüssigkeit eingesprüht wird, befinden sich Teilchen. Beim erstmaligen Anfahren der Anlage können Fremdteilchen, wie Zucker, mikrokristalline Cellulose oder Stärke, verwendet werden. Bei kontinuierlichen Verfahren wird laufend getrocknetes Produkt aus der Wirbelschicht entnommen, so dass nach einer gewissen Zeit das getrocknete Produkt keine Fremdteilchen enthält. Bei nachfolgenden Trocknungsläufen kann dieses reine getrocknete Produkt als Teilchen für die Wirbelschicht (Eigenkeime) eingesetzt werden, so dass keine Fremdteilchen benötigt werden und von Anfang an ein reines Produkt erhalten wird.

Die Parameter der Wirbelschichttrocknung, wie Einbringungsgeschwindigkeit und Einsprühdruck der zu trocknenden Flüssigkeit, Strömungsgeschwindigkeit und Temperatur des Prozessgases, Temperatur in der Wirbelschicht und Produktaustrag, werden vom Fachmann in Abhängigkeit von dem gewählten Anlagentyp, der zu trocknenden Flüssigkeit, den Dimensionen der Anlage, der tolerierbaren thermischen Belastung des Produkts und dem gewünschten Durchsatz geeignet gewählt.

Obwohl keine allgemein gültigen Angaben gemacht werden können, können die folgenden Parameter für einen Wirbelschichttrockner (einschließlich Strahlschichttrockner und Fließbetttrockner) mit ca. 101 Volumen als Anhaltspunkt angegeben werden.

| | |
|---|---|
| Menge an Teilchen: | 200 bis 400 g |
| Gasfluss: | 80 bis 180 m³/h |
| Gastemperatur (Zuluft): | 40 bis 140 °C |
| Temperatur in der Trocknungskammer: | 70 bis 110 °C |
| Einsprühmenge: | 0,5 bis 20 g/min |
| Einsprühdruck: | 1 bis 2,5 bar |
| Austragsöffnung: | 3 bis 8 cm |
| Durchschnittlich Verweildauer: | 0,5 bis 5 min |

Der Teilchendurchmesser des getrockneten Produkts kann durch die Wahl der Trocknungsparameter variiert werden. Typische Durchmesser, die eingestellt werden können, reichen von weniger als 1 mm bis ca. 5 mm.

In einer Ausführungsform der Erfindung ist bevorzugt, dass das getrocknete Produkt ausschließlich vom Saft abgeleitet ist, d.h., dass 100 Gew.-% des getrockneten Produkts vom Saft abgeleitet sind. Derartige getrocknete Produkte sind beispielsweise für die Herstellung von Saft durch das Auflösen in Wasser, ggf. unter Zusatz von entnommenen Aromen und Fruchtfleisch, besonders geeignet, wenn die gesetzlichen Regelungen keine Anteile an Fremdmaterial erlauben.

In anderen Ausführungsformen ist mindestens 20 Gew.-%, bevorzugt mehr als 50 Gew.-%, stärker bevorzugt mindestens 75 Gew.-%, noch stärker bevorzugt mindestens 90 Gew.-%, des getrockneten Produkts vom Saft abgeleitet. Neben den Bestandteilen, die vom Saft abgeleitet sind, kann das getrocknete Produkt Bestandteile enthalten, die in dem Endprodukt, zu dem das getrocknete Produkt weiterverarbeitet werden soll, enthalten sein sollen. Diese nicht vom Saft abgeleiteten Bestandteile sind nicht besonders beschränkt und umfassen Zucker, Zuckeraustauschstoffe, Aromen, Farbstoffe, Geschmacksstoffe, Salz, Gewürze, Stärke, pharmazeutisch verträgliche Träger, kosmetisch verträgliche Träger sowie Kombinationen davon. Diese Bestandteile können der Wirbelschicht entweder in Form von Feststoffteilchen oder in flüssiger, beispielsweise gelöster, Form zugeführt werden.

Das getrocknete Produkt wird über eine Austragsvorrichtung aus der Wirbelschicht entnommen. Das getrocknete Produkt kann entweder mit oder ohne eine weitere Aufbereitung verwendet werden. Beispielsweise kann das getrocknete Produkt geeigneten Verfahren, wie Sieben oder Windsichten, unterzogen werden, um einen gewünschten Teilchendurchmesser zu erhalten. Getrocknetes Produkt, dessen Teilchendurchmesser zu klein ist, kann der Wirbelschicht als Eigenkeime wieder zugeführt werden.

Das getrocknete Produkt, das mit dem erfindungsgemäßen Verfahren erhältlich ist, ist gegenüber Produkten, die mit konventionellen Verfahren getrocknet wurden, vorteilhaft, weil es eine besonders gute Löslichkeit, beispielsweise in Wasser, aufweist. Obwohl das erfindungsgemäße getrocknete Produkt eine sehr hohe Löslichkeit aufweist, ist es i.d.R. weniger hygroskopisch als Produkte, die mittels konventioneller Verfahren getrocknet wurden. Dies ist ein wesentlicher Vorteil bei der Lagerung des Produkts. Mit dem erfindungsgemäßen Verfahren können zudem enge Korngrößenverteilungen sowie im Wesentlichen staubfreie und rieselfähige Produkte erhalten werden, die sich besonders gut für die industrielle Weiterverarbeitung eignen.

Das getrocknete Produkt kann für alle Zwecke eingesetzt werden, in denen Säfte, Saftkonzentrate oder Saftpulver verwendet werden. Beispiele hierfür sind Lebensmittel, kosmetische Produkte, Arzneimittel und Nahrungsergänzungspräparate.

Bevorzugt wird das getrocknete Produkt zur Herstellung von safthaltigen Getränken wie Fruchtsaft, Nektar, Fruchtsaftgetränken, Schorlen, Softdrinks, Energy-Drinks, Sportgetränken, Eistee-Getränken, Getränken auf der Basis von Milchprodukten (wie Milch, Molke, Buttermilch, Kefir oder Jogurt), Gemüsesäften und Gemüsetrunken, verwendet. Besonders bevorzugt ist die Verwendung zur Herstellung von Fruchtsaft, Nektar, Fruchtsaftgetränken, Gemüsesäften und Gemüsetrunken.

Fruchtsaft darf nach deutschem Lebensmittelrecht ausschließlich aus Fruchtsaftbestandteilen und z.T. aus zugesetztem Zucker bestehen. Er kann aus dem erfindungsgemäßen getrockneten Produkt durch Lösen in Wasser hergestellt werden. Falls erwünscht, können von dem Fruchtsaft abgetrennte Aromen und Feststoffe, wie Fruchtfleisch, sowie, falls erwünscht und gesetzlich zulässig, Zucker zugesetzt werden.
Die anderen safthaltigen Getränke können neben Saftbestandteilen auch weitere Bestandteile enthalten. Diese sind z.T. gesetzlich reglementiert. Beispiele für weitere Bestandteile sind Alkohol, Zucker, Zuckeraustauschstoffe, Honig, Konservierungsstoffe, Aromen, Fruchtfleisch, Farbstoffe, Salz, Gewürze, Kräuter, Säuerungsmittel (wie Essig oder Genusssäuren), Kohlensäure, Vitamine, Mineralien, Geschmacksverstärker, Koffein, Teeextrakten und Kombinationen davon. Allerdings sind die möglichen Bestandteile nicht auf die oben aufgelisteten Möglichkeiten beschränkt. Zur Herstellung eines safthaltigen Getränks kann das getrocknete Produkt, falls gewünscht in Kombination mit weiteren Bestandteilen, in einer Flüssigkeit, wie Wasser oder einem Milchprodukt, gelöst werden. Wie bei Fruchtsaft können von dem Fruchtsaft abgetrennte Aromen und Feststoffe, wie Fruchtfleisch, ebenfalls zugesetzt werden. Fruchtsirupe sind viskoser als safthaltige Getränke können aber analog hergestellt werden.

Das getrocknete Produkt der vorliegenden Erfindung kann nicht nur zur Herstellung von Getränken verwendet werden. Vielmehr kann es auch eingesetzt werden, um andere Lebensmittel, kosmetische Produkte, Arzneimittel oder Nahrungsergänzungspräparate einen fruchtigen Geschmack zu verleihen. Beispiele für mögliche Anwendungen im Lebensmittelbereich sind die Verwendung in Getränkepulver, Süßigkeiten, Tees (beispielsweise Teemischungen, Teebeutel oder Instanttees), Frühstückscerialien einschließlich Müslis, Süßspeisen einschließlich Backwaren und Desserts, Backzutaten oder Backmischungen, Fertiggerichten (beispielsweise in trockener, pastenartiger, tiefgefrorener oder flüssiger Form), Soßen (beispielsweise in trockener, pastenartiger, tiefgefrorener oder flüssiger Form), Brühe, Kräutermischungen, Gewürzmischungen, Mayonnaise, Senf, Ketchup, aromatisierter Essig und aromatisiertes Öl.

Manche kosmetische Produkte, die beispielsweise auf die Lippen oder im Mund verwendet werden, wie Lippenbalsam, Lippenstift, Zahnpasta oder Mundspülungen, sollen ebenfalls einen fruchtigen Geschmack aufweisen. Dieser kann durch die Verwendung des erfindungsgemäßen Produkts in dem kosmetischen Produkt erzielt werden.

Es kann erwünscht sein, dass Arzneimittel und Nahrungsergänzungspräparate, die z.B. oral eingenommen werden oder in der Mundhöhle eingesetzt werden, einen fruchtigen Geschmack aufweisen. Das erfindungsgemäße getrocknete Produkt kann mit den anderen Bestandteilen des Arzneimittels oder Nahrungsergänzungspräparats vereint werden, um ein entsprechendes Arzneimittel oder Nahrungsergänzungspräparat zu erhalten. Im Gegensatz zu Arzneimittel oder Nahrungsergänzungspräparate, denen Aromen zugesetzt wurden, können durch die erfindungsgemäßen getrockneten Produkte alle Saftbestandteile dem Arzneimittel oder Nahrungsergänzungspräparat beigefügt werden.

Das erfindungsgemäße getrocknete Produkt kann im Vergleich zu handelsüblichen Saftkonzentraten besonders kostengünstig angeboten werden, da die Transport- und Lagerkosten auf Grund der Gewichts- und Volumenreduktion geringer sind. Eine weitere deutliche Kostenersparnis ergibt sich, da das getrocknete Produkt im Gegensatz zu Saftkonzentraten nicht gekühlt sondern bei Raumtemperatur transportiert und gelagert werden kann.

Durch die geringe thermische Belastung der zu trocknenden Flüssigkeit und die speziellen Eigenschaften der Wirbelschicht werden auch flüchtige Aromabestandteile des Saftes im getrockneten Produkt inkorporiert, so dass ein geschmacklich ansprechendes Produkt auch ohne vorherige Abtrennung und nachträgliches Hinzufügen der Aromabestandteile erhalten werden kann. Auf Wunsch, zum Beispiel um hohe Durchsatzraten zu erzielen, kann jedoch die bisher übliche Abtrennung der Aromen weiterhin erfolgen.

Die geringe thermische Belastung führt dazu, dass andere temperaturempfindliche Bestandteile der zu trocknenden Flüssigkeit, wie beispielsweise Vitamine, kaum zersetzt oder verflüchtigt werden und somit im getrockneten Produkt erhalten bleiben.

Die Erfindung wird im Folgenden anhand eines Beispiels detaillierter erläutert. Die Erfindung ist jedoch nicht auf dieses Ausführungsbeispiel beschränkt.

### BEISPIEL

Orangensaftkonzentrat (55,6 °Brix) (Döhler GmbH, Darmstadt, Germany) wurde in einem Wirbelschichttrockner getrocknet.

Der Wirbelschichttrockner war ein Strahlschichttrockner vom Typ ProCell (Glatt GmbH, Binzen, Deutschland), wobei das Orangensaftkonzentrat in Gleichstrom zu dem Prozessgas in die Trocknungskammer eingeführt wurde. Es wurden 300 g mikrokristalline Cellulose als Keim vorgelegt.

| | |
|---|---|
| Volumen der Trocknungskammer: | 101 |
| Prozessgas: | Luft |
| Gasfluss: | 120 m³/h |
| Gastemperatur: | 115 °C |
| Temperatur in der Trocknungskammer: | 80 °C |
| Düse: | Grundmodell Form 0, Ausführung 1,2 mm mit verlängertem Flüssigkeitseinsatz |
| Einsprühmenge: | 10 g/min |
| Einsprühdruck: | 2 bar |
| Austragsöffnung: | 6 cm, kein Gegendruck |
| Austrag/Zeiteinheit: | etwa 5 g/min |
| Durchschnittliche Verweildauer: | etwa 1 bis 2 min |

Das erhaltene getrocknete Produkt wies einen Teilchendurchmesser von etwa 2 bis 3 mm und einen Wassergehalt von etwa 1 bis 2 Gew.-% auf. Es war nicht klebrig und rieselfähig und konnte ohne Qualitätsverlust bei Raumtemperatur gelagert werden.

Das getrocknete Produkt ließ sich leicht auch in kaltem Wasser lösen. Das erhaltene Getränk schmeckte wie Orangensaft.

## Patentansprüche

**1.** Verfahren zum Trocknen von Saft, umfassend die Schritte:
(i) Bereitstellen von Saft; und
(ii) Wirbelschichttrocknung, um ein getrocknetes Produkt zu erhalten, wobei mindestens 20 Gew.-% des getrockneten Produkts vom Saft abgeleitetet sind.

**2.** Verfahren nach Anspruch 1, wobei dem Saft vor der Wirbelschichttrocknung ein Teil des enthaltenen Wassers entzogen wird.

**3.** Verfahren nach Anspruch 1 oder 2, wobei der Saft Fruchtsaft oder Gemüsesaft ist.

**4.** Verfahren nach Anspruch 3, wobei der Fruchtsaft Orangensaft ist.

**5.** Verfahren nach einem der vorhergehenden Ansprüche, wobei der Saft einen Fructosegehalt von mindestens 1,0 Gew.-% aufweist.

**6.** Verfahren nach einem der vorhergehenden Ansprüche, wobei die Wirbelschichttrocknung kontinuierlich durchgeführt wird.

**7.** Verfahren nach einem der vorhergehenden Ansprüche, wobei die Wirbelschichttrocknung aus Fließbettverfahren und Strahlschichtverfahren ausgewählt ist.

**8.** Verfahren nach Anspruch 7, wobei die Wirbelschichttrocknung ein Strahlschichtverfahren ist.

**9.** Verfahren nach einem der vorhergehenden Ansprüche, wobei mindestens 75 Gew.-% des getrockneten Produkts vom Saft abgeleitetet sind.

**10.** Verfahren nach Anspruch 9, wobei 100 Gew.-% des getrockneten Produkts vom Saft abgeleitetet sind.

**10.** Getrocknetes Produkt, erhältlich nach einem der vorstehenden Verfahren.

**11.** Verwendung des getrockneten Produktes gemäß Anspruch 10 zur Herstellung eines Lebensmittels, eines kosmetischen Produkts, eines Arzneimittels oder eines Nahrungsergänzungspräparats.

**12.** Verwendung nach Anspruch 11, wobei das Lebensmittel ein safthaltiges Getränk ist.

**13.** Verwendung nach Anspruch 12, wobei das safthaltige Getränk Fruchtsaft, Fruchtnektar oder ein Fruchtsaftgetränk ist.

**14.** Verfahren zur Herstellung eines Getränks, umfassend Lösen des getrockneten Produkts nach Anspruch 10 in Flüssigkeit.

**15.** Verfahren nach Anspruch 14, wobei die Flüssigkeit Wasser oder ein Milchprodukt ist.

**16.** Verfahren nach Anspruch 14 oder 15, wobei das Getränk weitere Zutaten, ausgewählt aus Alkohol, Zucker, Zuckeraustauschstoffen, Honig, Konservierungsstoffen, Aromen, Fruchtfleisch, Farbstoffen, Salz, Gewürzen, Kräutern, Säuerungsmitteln, Kohlensäure, Vitaminen, Mineralien, Geschmacksverstärkern, Koffein, Teeextrakten und Kombinationen davon, enthält.
